# EUROPÄISCHE PATENTSCHRIFT

(11) **EP 2 277 132 B1**
(45) Veröffentlichungstag und Bekanntmachung des Hinweises auf die Patenterteilung: **20.03.2013**
(21) Anmeldenummer: 09737889.7
(22) Anmeldetag: 29.04.2009
(51) Int. Cl.: G06K 19/077

(54) **SICHERHEITSELEMENT MIT IC-KARTE**
SAFETY ELEMENT HAVING AN IC CARD
ÉLÉMENT DE SÉCURITÉ COMPRENANT UNE CARTE À CIRCUIT INTÉGRÉ

(30) Priorität: 30.04.2008 DE 102008021519
(43) Veröffentlichungstag der Anmeldung: 26.01.2011
(73) Patentinhaber: Giesecke & Devrient GmbH, 81677 München (DE)
(72) Erfinder: HEUSMANN, Hans, 82281 Egenhogen (DE)
(74) Vertreter: Branzka, Thomas
(86) Internationale Anmeldenummer: PCT/EP2009/003118
(87) Internationale Veröffentlichungsnummer: WO 2009/132845

(56) Entgegenhaltungen:
- WO-A2-2006/123134
- DE-A1- 19 600 393
- US-A1- 2007 176 007

## Beschreibung

Die Erfindung betrifft ein nach Art eines tragbaren Gebrauchgegenstandes gestaltetes Sicherheitselement, das mittels einer IC-Karte aufgebaut ist, sowie ein Verfahren zum Aufbau eines solchen Sicherheitselementes. Insbesondere betrifft die Erfindung einen Token in Form eines Schlüsselanhängers, der im wesentlichen aus einem Gehäuse besteht, in das eine nicht normgemäße Chipkarte eingesetzt ist und seinen Zusammenbau.

Eine Sicherheitseinrichtung dieser Art ist beispielsweise unter der Bezeichnung "Sidecard" von der der Firma MASTERCARD bekannt. Die bekannte Einrichtung besteht aus einem in etwa L-förmigen Rahmen mit U-Profil, dessen Schenkel eine lange und eine kurze Seite einer kontaktlos arbeitenden Chipkarte in einem nicht normgemäßen Format umgreifen. Die Karte ist über ein Drehgelenk am kurzen Schenkel des L-förmigen Rahmens mit diesem verbunden und kann nach Art eines Rasiermessers in den Rahmen hinein- oder aus diesem herausgeschwenkt werden; im ausgeschwenkten Zustand wird die Karte dann nahezu vollständig sichtbar. Am kurzen Schenkel des Rahmens ist außenseitig weiter eine Öse angebracht, welche die Befestigung der gesamten Einrichtung an einem Schlüsselring erlaubt. Die Einrichtung ist intuitiv zu gebrauchen, ist aber über das Gelenk und die offenliegenden Kartenseiten empfindlich gegen Beschädigung. Um eine große Lebensdauer zu erlangen, sind hochwertige Materialien zu verwenden und ist eine sorgfältige Fertigung erforderlich.

Aus der US 7,264,172 B2 ist weiter eine Sicherheitseinrichtung bekannt, die aus einem taschenartigen Gehäuse besteht, in das eine IC-Karte eingeschoben wird, die zuvor aus einer größeren Basiskarte herausgetrennt wurde. An einem schmalen Kopfende des Gehäuses ist eine Ausnehmung ausgebildet, mittels derer das Gehäuse nach Einschieben einer IC-Karte an einem Schlüsselbund befestigt werden kann. In eine Außenfläche des taschenartigen Gehäuses ist weiter ein Fenster eingebracht, so daß die IC-Karte im eingeschobenen Zustand darunter freiliegt. Um die für diese bekannte Richtung benötigte IC-Karte bereitzustellen, kann auf bekannte Techniken zur Herstellung von normgemäßen Chipkarten zurückgegriffen werden. Die Herstellung der Sicherheitseinrichtungen kann daher kostengünstig geschehen. Bei Aufbau der Einrichtung durch einen Endnutzer besteht allerdings die Gefahr, daß dieser die IC-Karte beim Ausbrechen aus der größeren Trägerkarte beschädigt oder daß er sie falsch in das Gehäuse einschiebt. Zwar können solche Fehlnutzungen durch konstruktive oder instruktive Maßnahmen ganz oder zum Teil aufgefangen werden, etwa durch eine ausführliche Bedienungsanleitung, jedoch erhöht das den Herstellungsaufwand. Der Zusammenbau der Sicherheitseinrichtung könnte auch im Rahmen der Fertigung bereits vor Übergabe an den Endnutzer erfolgen, was aber einen weiteren Herstellungsschritt verursacht und damit ebenfalls den Aufwand erhöht.

Aus der DE 196 00 393 A1 ist eine Halbleitervorrichtung bekannt, die auf einem Leiterrahmen basiert, der auch bei hohen Temperaturen während der Herstellung keine thermischen Verformungen zeigt. Der Leiterrahmen besteht aus einer Struktur von durch Schlitze unterbrochenen Stegen, die mit dem Rand des Leiterrahmens bzw. mit dazu orthogonal angeordneten Trennstegen verbunden sind. In ihrem Zentrum bildet die Steganordnung eine Bodenplatte, die als Stanzunterlage dient und die auf die höchste Temperatur erwärmt wird. Um eine auf der zentralen Bodenplatte des Leiterrahmens ausgebildete integrierte Schaltung kann ein rechteckiges flaches Gehäuse ausgebildet sein, das das gesamte Zentrum des Leiterrahmens einschließlich der Bodenplatte umschließt. Die danach vorliegende Halbleitervorrichtung wird mit dem Gehäuse ausgeliefert. Angaben zur Herstellung des Gehäuses macht die Schrift nicht.

Es ist Aufgabe der Erfindung, ein auf einer IC-Karte beruhendes Sicherheitselement anzugeben, das günstig herzustellen ist und das beschädigungssicher aufgebaut werden kann.

Diese Aufgabe wird gelöst durch ein Sicherheitselement mit den Merkmalen des Hauptanspruchs sowie ein Verfahren zum Aufbau eines Sicherheitselementes mit den Merkmalen des Anspruchs 12.

Die erfindungsgemäße Lösung beruht auf dem Ansatz in einer Grundkarte unter Belassung einer besonders gestalteten Ausnehmung eine ausbrechbare Einsatzkarte auszubilden, die nach Einbringen in ein Gehäuse zusammen mit diesem ein Sicherheitselement bildet. Erfindungsgemäß ist die von Ausnehmung umschlossene Fläche größer als die Querschnittsfläche des Gehäuses in dem Bereich, in dem die Einsatzkarte gelagert wird. Der erfindungsgemäße Aufbau des Sicherheitselements hat den Vorteil, daß das Trennen des Außenteils der Grundkarte erst nach dem Einbringen der Einsatzkarte in das Gehäuse erfolgen kann, wodurch das Trennen zugleich erleichtert und die Gefahr einer Beschädigung der Einsatzkarte herabgesetzt wird. In besonders vorteilhafter Weise kann das Sicherheitselement durch Anbringen des Gehäuses beim Herausgeber vormontiert werden, ohne daß dazu der aufwendige Einzelschritt des Ausbrechens der Einsatzkarte aus der Grundkarte erforderlich ist. Dabei ist besonders vorteilhaft, daß das Gehäuse erst auf eine Grundkarte in einem Standardformat, z.B. dem ID-1-Format montiert werden kann. Für Standardformate kann, anders als für Nichtstandardformate, auf vorhanden Fertigungstechnologien zurückgegriffen werden, wodurch eine maschinelle Ausführung der Vormontage erleichtert wird. Die unter Umständen aufwendige Entwicklung neuer Prozesse für den Umgang mit einem Nichtstandardformat wird vermieden. Wird andererseits die Endmontage des Sicherheitselements dem Endnutzer überlassen, so kann durch entsprechende Gestaltung der Ausnehmung ein intuitiv richtiger Zusammenbau der einzelnen Teile des Sicherheitselements bewirkt werden. Da der Außenteil erst in einem letzten Schritt nach vollständiger Montage des Sicherheitselements von diesem getrennt wird, ist es ferner in vorteilhafter Weise möglich, auf dem Außenteil Instruktionen anzubringen, die einem Endnutzer Montagehinweise geben und beispielsweise eindeutig die Position eine bestimmten Gehäusepartie anzeigen.

Vorteilhafte Weiterbildungen und zweckmäßige Ausgestaltungen der Erfindung ergeben sich aus den Unteransprüchen genannten Merkmalen.

Unter Bezugnahme auf die Zeichnungen wird ein Ausführungsbeispiel der Erfindung nachfolgend näher erläutert.

Es zeigen
Fig.1 eine Grundkarte mit darin ausgebildeter Einsatzkarte in Aufsicht,
Fig. 2 eine Grundkarte mit einem aus zwei Hälften bestehenden Gehäuse in explosionsartiger Darstellung im Längsquerschnitt entlang der Mittelachse,
Fig. 3 ein fertig montiertes Sicherheitselement vor dem Trennen des Außenteils der Grundkarte im Querschnitt und
Fig. 4 ein Sicherheitselement nach Entfernen des Außenteils im Querschnitt.

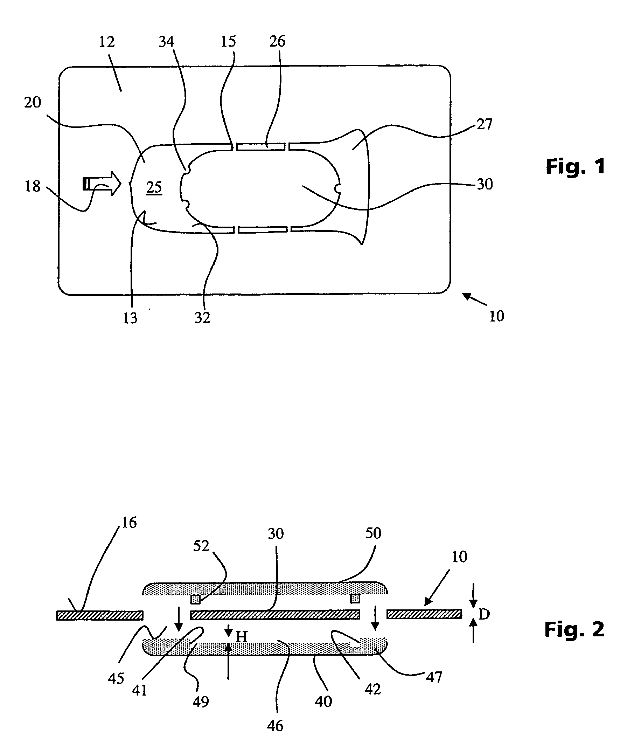

Die in Fig. 1 dargestellte Grundkarte 10 besteht aus einem vorzugsweise aus Kunststoff hergestellten Kartenkörper mit einer Dicke D in einem herstellungsfreundlichen Format, etwa dem für Chipkarten genormten ID-1-Format.

Die Grundkarte 10 gliedert sich in eine Einsatzkarte 30 und einen die Einsatzkarte 30 umgebenden, nachfolgend Überkarte genannten, Außenteil 12. Die Einsatzkarte 30 ist eine an sich bekannte IC-Karte und beinhaltet in einen IC mit einer kontaktbehafteten oder kontaktlosen Schnittstelle. Einsatzkarte 30 und Überkarte 12 sind durch eine Ausnehmung 20 getrennt, welche, unterbrochen nur durch mindestens einen Steg 15, die Einsatzkarte 30 umschließt. Die Ausnehmung 20 wird durch die Innenkontur 13 der Überkarte 12 einerseits und durch die Außenkontur 32 der Einsatzkarte 30 andererseits begrenzt. Sie besitzt eine bezüglich der Querachse der Grundkarte 12 asymmetrische Form und gliedert sich in einen großflächigen Kopfbereich 25, einen ebenfalls großflächigen Fußbereich 27 sowie eine im Vergleich dazu kleinflächigere Übergangszone 26 entlang den Längskanten der Einsatzkarte 30. Über den mindestens einen Steg 15 sind Einsatzkarte 30 und Überkarte 12 miteinander verbunden. Stege 15, Einsatzkarte 30 und Überkarte 12 sind aus einer einzelnen Grundkarte 10 herausgebildet und bilden eine Materialeinheit.

Die Innenkontur 13 der Überkarte 12 ist auf die Umfangskontur eines Gehäuses 60 abgestimmt, mit dem die Einsatzkarte 30 zu einem Sicherheitselement 1 montiert wird. Zweckmäßig besitzt die Innenkontur 13, und damit die Ausnehmung 20, eine zumindest bezüglich einer Achse asymmetrische Gestalt, die bei Anlegen des korrespondierenden Gehäuses 60 dessen Ausrichtung eindeutig festgelegt. Die Einsatzkarte 30 ist zweckmäßig so geformt, daß ihr eine Längs- und eine Querachse zugewiesen können; punktsymmetrische Formgebungen sind gleichwohl möglich. Die Einsatzkarte 30 besitzt eine unabhängig von der Innenkontur 13 frei geformte Außenkontur 32, die auf eine Aufnahme 46 in einem Gehäuse 60 abgestimmt ist, mit dem sie zu einem Sicherheitselement 1 montiert wird. Entlang der Außenkontur 32 der Einsatzkarte 30 sind, zweckmäßig in einer in Bezug auf eine Richtung eindeutigen Anordnung, Einkerbungen 34 angelegt, die zur Ausrichtung und Fixierung der Einsatzkarte 30 in einer Aufnahme 46 dienen. Es können, wie in Fig. 1 angedeutet, mehre Einkerbungen 34 vorgesehen sein, sie können allerdings auch entfallen.

Einsatzkarte 30 und Überkarte 12 sind über mindestens einen, vorzugsweise aber, wie in Fig. 1 angedeutet, mehrere schmale Stege 15 miteinander verbunden. Die Stege 15 besitzen Sollbruchstellen 16 und sind so geformt, daß die Verbindung von Überkarte 12 und Einsatzkarte 30 einerseits so fest ist, daß die Einsatzkarte 30 sich bei ordnungsgemäßer Handhabung weder vor der Übergabe an einen Endnutzer noch bei der Montage von der Überkarte 12 löst, und andererseits so schwach, daß bei gezielter Anwendung kleiner Kräfte durch einen Endnutzer ein Trennen der Überkarte 12 und der Einsatzkarte 30 jederzeit möglich ist. Zur Realisierung der Sollbruchstellen weisen die Stege 15 vorzugsweise - nicht weiter gezeigte - geometrische Gestaltungen auf, etwa horizontale und/oder vertikale Materialschwächungen und/oder eine besonders gestaltete Feinkonturierung. Zweckmäßig sind die Stege 15 entlang den Längskanten der Einsatzkarte 30 ausgebildet. Geeignete Anordnung und Ausbildung der Stege 15 sind aber an sich bekannt, weshalb darauf an dieser Stelle nicht weiter eingegangen wird.

Zu der durch die Innenkontur 13 der Ausnehmung 20 und die Außenkontur 32 der Einsatzkarte 30 vorgegebenen Form korrespondiert, wie in Fig. 2 veranschaulicht, ein Gehäuse 60. Es besteht aus einem halbschalenartigen Untergehäuse 40 und einem ebenso halbschalenartigen Obergehäuse 50, die aus Kunststoff bestehen und an ihren Innenkanten vorzugsweise formschlüssig verbunden werden. Das Gehäuse 60 ist höher als die Einsatzkarte 30 und umschließt einen Bauraum, in dem die Einsatzkarte 30 vorzugsweise vollständig aufgenommen wird. Es ist zweckmäßig nach Art eines Schlüssels oder Schlüsselanhängers gestaltet und kann an geeigneter Stelle eine - nicht gezeigte - Öffnung zum Befestigen an einem Schlüsselbund aufweisen. Das Gehäuse 60 kann transparent, so daß die Einsatzkarte 30 sichtbar ist, oder ganz oder teilweise farbig opak ausgeführt sein.

Die Gehäuseteile 40, 50 sind so gestaltet, daß sie über eine Verbindungsfläche aneinanderliegen, die zu einem Teil von der Oberfläche einer zwischen den Gehäuseteilen 40, 50 plazierten Einsatzkarte 30 gebildet wird. Die Verbindungsfläche kann, wie in Fig. 2 angedeutet, vollständig mit einer Oberfläche 16 der Grundkarte 10 zusammenfallen. Daneben sind Gestaltungen der Gehäuseteile 40, 50 möglich, die eine gestufte Verbindungsfläche liefern.

Entlang der Verbindungsfläche entspricht die Umfangskontur des Gehäuses 60 zweckmäßig paßgenau der Innenkontur 13 der Überkarte 12, so daß die Querschnittsfläche des Gehäuses 60 auf der Höhe, wo die Verbindungsfläche von der Einsatzkarte 30 gebildet wird, genau der Fläche der Ausnehmung 20 mit der Einsatzkarte 30 entspricht; vorzugsweise besitzt das Gehäuse 60 dabei an der Verbindungsfläche auf der Höhe des durch die Einsatzkarte 30 gebildeten Teils seine größte Querschnittsfläche. Durch ein Verbindungssystem, das wie in Fig. 2 angedeutet, durch Zapfen 52 in einem Gehäuseteil und entsprechende Vertiefungen 49 im anderen Gehäuseteil gebildet sein kann, sind Untergehäuse 40 und Obergehäuse 50 miteinander verbunden.

Angrenzend an die Verbindungsfläche weist das Untergehäuse 40 zentral einen gegenüber der Verbindungsfläche über Randstufen 41, 42 vertieften Bereich 46 auf, der eine Aufnahme für eine Einsatzkarte 30 bildet. Die Höhe H der Randstufen 41, 42 bzw. die Tiefe der Aufnahme 46 entspricht vorzugsweise genau der Dicke D des Kartenkörpers der Grundkarte 10. Durch die Aufnahme 46 wird das Untergehäuse 40 im Längsquerschnitt, wie in Fig. 2 dargestellt, in drei Bereiche gegliedert, nämlich einem erhöhten Bugbereich 45, die Aufnahme 46 in der Mitte und einem erhöhten Heckbereich 47. Bugbereich 45 und Heckbereich 47 sind so geformt, daß sie in den Kopfbereich 25 bzw. den Fußbereich 27 der Ausnehmung 20 in der Grundkarte 10 passen. Vorzugsweise folgt die Umfangskontur des Untergehäuses 40 im Bugbereich 45 und im Heckbereich 47 paßgenau der Innenkontur 13 der Überkarte 12. Zweckmäßig entspricht die Umfangskontur auch im Bereich der Aufnahme 46 genau der Innenkontur 12 der Überkarte 12. Da die Verbindungsfläche im Bereich der Aufnahme 46 allerdings unterhalb der Ebene der Grundkarte 10 liegt, kann die Form des Untergehäuses 40 hier auch von der durch die Innenkontur 13 vorgegebenen Form ganz oder teilweise abweichen und insbesondere eine kleinere Fläche einfassen. In einer Variante kann die Aufnahme 46 auch von einer nur an den Positionen der Stege 15 unterbrochenen Wandung eingefaßt sein, deren Höhe den Randstufen 41, 42 entspricht. Die Umfangskontur des Untergehäuses 40 folgt dann auch in der Übergangszone zweckmäßig wie im Bugbereich 45 und im Heckbereich 47 paßgenau der Innenkontur 13; die Stärke der Wandung entspricht zweckmäßig der Länge der Stege 15. Die Gestaltung des Untergehäuses 40 ist mithin so, daß eine Grundkarte 10 darauf aufgesetzt werden kann, wobei die in der Grundkarte 10 enthaltene Einsatzkarte 30 in der Aufnehmung 46 zu liegen kommt und der Bugbereich 45 bzw. der Heckbereich 47 des Untergehäuses 40 in den Kopfbereich 25 bzw. Fußbereich 27 der Ausnehmung 20 greifen. Am Übergang zwischen Aufnahme 46 und Bug- bzw. Heckbereich sind neben den Randstufen 41, 42 Vertiefungen 49 in die Aufnahme 46 eingebracht, die Gegenstücke zur im Obergehäuse 50 ausgebildeten Zapfen 52 bilden. Die Lage der Vertiefungen 49 innerhalb der Aufnahme 46 entspricht genau den Positionen der Einkerbungen 34 in der Außenkontur 32 der Einsatzkarte 30.

Das Obergehäuse 50 ist dazu bestimmt, mit dem Untergehäuse 40 verbunden zu werden, und besitzt zumindest entlang der Verbindungsfläche vorzugsweise die gleiche Umfangskontur wie das Untergehäuse 40. D.h. an der Verbindungsfläche folgt die Außenkontur des Obergehäuses 50 zweckmäßig paßgenau der Innenkontur 13 der Überkarte 12. Die dem Untergehäuse 40 zugewandte Innenseite des Obergehäuses 50 kann, wie in Fig. 2 angedeutet, plan ausgeführt sein. Korrespondierend zu den Vertiefungen 49 sind aus der Innenseite hervorstehende Zapfen 52 ausgebildet, die beim Montieren des Gehäuses 60 in die Vertiefungen 49 einrasten und mit diesen ein Verbindungssystem bilden.

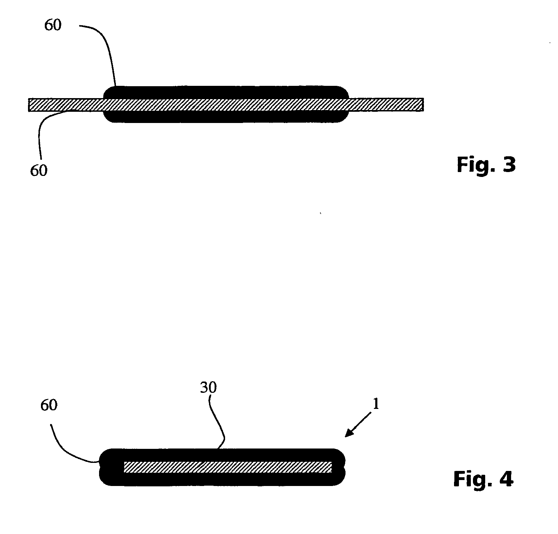

Anhand der Fig. 3 und 4 ist eine Möglichkeit zur Montage eines Sicherheitselements 1 aus einer Grundkarte 10, einem Untergehäuse 40 und einem Obergehäuse 50 veranschaulicht. Zunächst wird die Grundkarte 10 so über das Untergehäuse 40 plaziert, daß die Einsatzkarte 30 in der Aufnahme 46 zu liegen kommt. Durch das gleichzeitig Zusammenwirken der Außenkontur des Untergehäuses 40 mit der Innenkontur 13 der Überkarte 13 und der Außenkontur 32 der Einsatzkarte 30 mit den Randstufen 41, 42 der Aufnahme 46 sind dabei die relativen Positionen von Untergehäuse 40 und Grundkarte 10 beim Zusammenfügen eindeutig festgelegt. Die Einsatzkarte 30 kommt damit stets in der richtigen Lage in der Aufnahme 46 zu liegen.

Zur weiteren Sicherstellung, daß das Zusammenfügen von Einsatzkarte 30 und Untergehäuse 40 richtig in der vorgeschriebenen Weise erfolgt, kann auf der Oberfläche 16 der Überkarte 12 eine graphische Markierung 18 aufgebracht sein, etwa wie in Fig. 1 angedeutet, in Gestalt eines Pfeils, die zu einer entsprechenden Markierung auf dem Untergehäuse 40 korrespondiert. Zur weiteren Unterstützung des Zusammenbaus können auf der Oberfläche 16 der Überkarte 12 desweiteren auch textuelle Anweisungen aufgebracht sein, die den Zusammenbau erläutern.

Das durch die Grundkarte 10 und das daran angesetzte Untergehäuse 40 gebildete Halbzeug wird anschließend mit dem Obergehäuse 50 verbunden. Das Obergehäuse 50 wird hierzu auf der abgewandten Seite der Grundkarte 10 über der Ausnehmung 20 so plaziert, daß die Zapfen 52 in die Einkerbungen 34 sowie in die darunterliegenden Vertiefungen 49 des Untergehäuses 40 greifen. Im Bugbereich 45 und Heckbereich 47 liegen Untergehäuse 40 und Obergehäuse 50 danach unmittelbar aufeinander. Im Bereich der Aufnahme 46 ist die Einsatzkarte 30 zwischen Untergehäuse 40 und Obergehäuse 50 geklemmt. Über die Stege 15 ist sie dabei immer noch mit der Überkarte 12 verbunden, welche, wie in Fig. 3 dargestellt, das nunmehr zusammengesetzte Gehäuse 60 nach Art einer Schablone umgibt.

Nachfolgend wird die Überkarte 12 entfernt. Dies geschieht bei Verwendung einer Steganordnung, wie sie in Fig. 1 angedeutet ist, beispielsweise durch ein Verdrehen der Überkarte 12 gegen das Gehäuse 60 um eine Querachse der Einsatzkarte 30 bzw. des Gehäuses 60, so daß die Stege 15 an den Sollbruchstellen abreißen. Es entsteht schließlich, wie in Fig. 4 gezeigt, ein Sicherheitselement 1 mit einer SandwichStruktur, wobei die Einsatzkarte 30 zwischen Untergehäuse 40 und Obergehäuse 50 formschlüssig so eingeklemmt ist. Die seitlichen Längskanten der Einsatzkarte 30 liegen, wie in Fig. 4 dargestellt, offen; sie können bei entsprechender Gestaltung der der Gehäuseteile 40, 50 bzw. des Verbindungsmechanismus allerdings auch teilweise oder ganz bedeckt sein.

Es ist selbstverständlich, daß der Zusammenbau des Sicherheitselements 1 auch mit dem Aufsetzen des Obergehäuses 50 auf die Grundkarte 10 begonnen werden kann. Weiter kann das Entfernen der Überkarte 12 bereits nach Verbinden mit nur einem Gehäuseteil erfolgen.

Der Zusammenbau des Sicherheitselements 1 aus Gehäuseteilen 40, 50 und Grundkarte 10 erfolgt zweckmäßig durch einen Endnutzer, dem hierzu die Grundkarte 10 sowie die beiden Gehäuseteile 40 und 50 zur Verfügung gestellt werden. In einer vorteilhaften Variante ist vorgesehen, die Gehäuseteile 40, 50 bereits vor Übergabe an einen Endnutzer beim Hersteller des Sicherheitselementes 1 zusammenzufügen, die Überkarte 12 aber mit der Einsatzkarte 30 verbunden zu belassen. Das so gebildete halbfertige Produkt wird dem Endnutzer übergeben; erst der endnutzer entfernt die Überkarte 12.

Unter Beibehaltung des grundlegenden Gedankens, eine Grundkarte 10 mit einer darin ausgebildeten, herausbrechbaren Einsatzkarte 30 durch eine besondere Ausführung der die Überkarte 12 und die Einsatzkarte 30 trennenden Ausnehmung 20 so zu gestalten, daß die Einsatzkarte 30 noch in der Grundkarte 10 mit einem Gehäuse 60 versehen werden kann, gestattet die vorbeschriebene Lösung eine Vielzahl von Ausführungsvarianten.

So kann das das Gehäuse 60 selbstverständlich eine andere Form als die eines Schlüssels oder Schlüsselanhängers besitzen und beispielsweise nach Art eines Schreibstiftes oder eines Armbandes gestaltet sein. Weiter können die Rollen von Ober- und Untergehäuse ohne weiteres vertauscht werden. Ebenso können einzelne Gestaltungsmerkmale auf beide Gehäuseteile 40, 50 verteilt werden. Beispielsweise können beide Gehäuseteile 40, 50 jeweils die Hälfte einer Aufnahme mit einer Tiefe T = H/2 aufweisen und die Gestaltung von Bugteil 45 und Heckteil 47 so erfolgen, daß eine zwischen die beiden Gehäuseteile 40, 50 plazierte Einsatzkarte 30 von beiden teilweise aufgenommen wird. Weiter kann für die Form der Innenkontur 13 bzw. der Außenkontur 32 neben einer achsensymmetrischen eine beliebige andere Geometrie, etwa auch eine punktsymmetrische, gewählt werden. Anstelle oder zusätzlich zu Einkerbungen 34 können in der Einsatzkarte 30 auch Durchbrüche vorgesehen sein, durch die entsprechende Zapfen 52 hindurchgreifen. Zweckmäßig besitzt dabei wenigstens ein Durchbruch eine nicht punktsymmetrische Form, so daß die Ausrichtung eines in die Ausnehmung greifenden Zapfens 52 und damit die Lage der Einsatzkarte 30 relativ zu der Aufnahme 46 eindeutig definiert wird. Weiter kann das Gehäuse 60 auch aus mehr als zwei Teilen bestehen und die Umfangskontur kann einer beliebigen Linie zwischen Innenkontur 13 der Überkarte 12 und Außenkontur 32 der Einsatzkarte 30 folgen. Anstelle von Vertiefungen 49 und Zapfen 52 kann ein anderes Verbindungssystem zur Verbindung von Untergehäuse 40 und Obergehäuse 50 eingesetzt werden, beispielsweise ein auf Randverklemmung beruhendes oder eine Verbindung mit Hilfe zu diesem Zweck bereitgestellten Schrauben. Auch kann das Verbinden von Untergehäuse 40 und Obergehäuse 50 über ein Scharnier erfolgen, an dem die beiden Gehäuseteile zunächst zu verbinden sind. Nach Herstellen der Scharnierverbindung können die Gehäuseteile dann aufeinandergeklappt werden. Die Verbindung kann ferner lösbar oder unlösbar bzw. nur zerstörerisch auflösbar ausgebildet sein.

### Bezugszeichenliste

- 1: Sicherheitselement
- 10: Grundkarte
- 12: Überkarte
- 13: Innenkontur
- 15: Steg
- 16: Oberfläche
- 18: Markierungen
- 20: Ausnehmung
- 25: Kopfbereich
- 26: Übergangszone
- 27: Fußbereich
- 30: Einsatzkarte
- 32: Außenkontur
- 40: Untergehäuse
- 41: Randstufe
- 42: Randstufe
- 45: Bugbereich
- 46: Aufnahme
- 47: Heckbereich
- 49: Vertiefungen
- 50: Obergehäuse
- 52: Zapfen
- 60: Gehäuse

## Patentansprüche

1. Sicherheitselement mit einem Gehäuse (60) und einer von dem Gehäuse zumindest teilweise umschlossenen IC-Karte (30), die in einer in dem Gehäuse ausgebildeten Aufnahme (46) gelagert ist, wobei die IC-Karte (30) Teil einer größeren Grundkarte (10) ist, innerhalb derer sie in einer Ausnehmung (20) angeordnet und mit der sie nur über mindestens einen mit einer Sollbruchstelle versehenen Steg (15) verbunden ist, **dadurch gekennzeichnet, daß** die die Ausnehmung (20) einfassende Innenkontur (13) in der Grundkarte (10) eine Fläche umschließt, die gleich oder größer ist als die Querschnittsfläche des Gehäuses (60) auf Höhe der Aufnahme (46).

2. Sicherheitselement nach Anspruch 1, **dadurch gekennzeichnet, daß** die IC-Karte (30) vom Kontaktlos-Typ ist.

3. Sicherheitselement nach Anspruch 1, **dadurch gekennzeichnet, daß** das Gehäuse (60) aus wenigstens zwei Gehäuseteilen (40, 50) besteht, und zumindest einer davon einen Bereich (45, 47) aufweist, der nach Anlegen an eine Grundkarte (10) in die Ausnehmung (20) greift.

4. Sicherheitselement nach Anspruch 3, **dadurch gekennzeichnet, daß** einer der Gehäuseteile (40) nach Art einer Halbschale mit einer zu dem anderen Gehäuseteil (50) weisenden Verbindungsfläche ausgebildet ist und die Aufnahme (46) als ein gegenüber der Verbindungsfläche vertiefter Bereich ausgeführt ist.

5. Sicherheitselement nach Anspruch 1, **dadurch gekennzeichnet, daß** die Tiefe (H) der Aufnahme (46) der Dicke (D) einer Grundkarte (10) entspricht.

6. Sicherheitselement nach Anspruch 1, **dadurch gekennzeichnet, daß** die Fläche der Aufnahme (46) der Fläche der IC-Karte (30) entspricht.

7. Sicherheitselement nach Anspruch 3, **dadurch gekennzeichnet, daß** die Gehäuseteile (40, 50) jeweils korrespondierende Elemente (49, 52) eines mechanischen Verbindungssystems aufweisen, das eine dauerhafte Verbindung der Gehäuseteile (40, 50) gestattet.

8. Sicherheitselement nach Anspruch 7, **dadurch gekennzeichnet, daß** die IC-Karte (30) wenigstens eine Einkerbung (34) an ihrer Außenkontur (32) und/oder eine Ausnehmung in ihrer Fläche aufweist, durch die das Verbindungssystem (49, 52) hindurchgreift.

9. Sicherheitselement nach Anspruch 8, **dadurch gekennzeichnet, daß** zumindest eine Einkerbung (34) bzw. eine Ausnehmung eine nicht rotationssymmetrische Form aufweist oder zumindest zwei Einkerbungen (34) oder Ausnehmungen in einer nicht rotationssymmetrischen Anordnung vorgehen sind, die die relative Lage der IC-Karte (30) zu der Aufnahme (46) zumindest in Bezug auf eine Achsenrichtung eindeutig festlegen.

10. Sicherheitselement nach Anspruch 3, **dadurch gekennzeichnet, daß** die Umfangskontur des Gehäuses (60) zumindest in Bezug auf eine Achse eine asymmetrische Form aufweist, welche die relative Lage der Gehäuseteile (40,50) zueinander zumindest in Bezug auf diese Achsenrichtung eindeutig festlegt.

11. Sicherheitselement nach Anspruch 1, **dadurch gekennzeichnet, daß** die Umfangskontur des Gehäuses (60) paßgenau der die Ausnehmung (20) begrenzenden Innenkontur (13) in der Grundkarte (10) entspricht.

12. Verfahren zum Aufbau einer Sicherheitseinrichtung mit den Schritten:
- Bereitstellen eines Gehäuses (60) mit einer Aufnahme (46) für eine IC-Karte (30),
- Bereitstellen einer größeren Grundkarte (10), in der unter Belassung einer Ausnehmung (20), die größer ist als die Querschnittsfläche des Gehäuses (60) auf Höhe der Aufnahme (46), eine IC-Karte (30) ausgebildet ist, die nur über mit einer Sollbruchstelle versehene Stege (15) mit der Grundkarte (10) verbunden ist,
- Verbinden der Grundkarte (10) und des Gehäuses (60), so daß die IC-Karte (30) in der Aufnahme (46) liegt,
- Lösen des Außenteils (12) der Grundkarte (10) von der eingesetzten IC-Karte (30).

## Claims

1. A security element with a housing (60) and an IC card (30) at least partly surrounded by the housing, the IC card being supported in a receiving means (46) configured in the housing, wherein the IC card (30) forms part of a larger base card (10), is arranged therein in a recess (20) and is connected therewith only via at least one bar (15) equipped with a rated breaking point, **characterized in that** the inside contour (13) enclosing the recess (20) surrounds an area in the base card (10) which is equal to or larger than the cross-sectional area of the housing (60) at the level of the receiving means (46).

2. The security element according to claim 1, **characterized in that** the IC card (30) is of the contactless type.

3. The security element according to claim 1, **characterized in that** the housing (60) consists of at least two housing members (40, 50), and at least one of them has an area (45, 47) which engages the recess (20) after being laid against a base card (10).

4. The security element according to claim 3, **characterized in that** one of the housing members (40) is configured in the fashion of a half-shell with a connecting area pointing to the other housing member (50), and the receiving means (46) is formed as an area that is deepened with respect to the connecting area.

5. The security element according to claim 1, **characterized in that** the depth (H) of the receiving means (46) corresponds to the thickness (D) of a base card (10).

6. The security element according to claim 1, **characterized in that** the area of the receiving means (46) corresponds to the area of the IC card (30).

7. The security element according to claim 3, **characterized in that** the housing members (40, 50) each have corresponding elements (49, 52) of a mechanical connection system which permits a permanent connection of the housing members (40, 50).

8. The security element according to claim 7, **characterized in that** the IC card (30) has at least one notch (34) on its outside contour (32) and/ or a recess in its area, through which the connection system (49, 52) engages.

9. The security element according to claim 8, **characterized in that** at least one notch (34) or one recess has a non-rotationally symmetric shape or at least two notches (34) or recesses are provided in a non-rotationally symmetric arrangement, which unambiguously define the position of the IC card (30) relative to the receiving means (46) at least with respect to one axial direction.

10. The security element according to claim 3, **characterized in that** the circumferential contour of the housing (60) has an asymmetric form at least with respect to one axis, said form unambiguously defining the position of the housing members (40, 50) relative to each other at least with respect to said axial direction.

11. The security element according to claim 1, **characterized in that** the circumferential contour of the housing (60) corresponds in an accurate fit to the inside contour (13) limiting the recess (20) in the base card (10).

12. A method for constructing a security device with the steps of:
- supplying a housing (60) with a receiving means (46) for an IC card (30),
- supplying a larger base card (10), in which, while leaving a recess (20) that is larger than the cross-sectional area of the housing (60), there is configured an IC card (30) on the level of the receiving means (46), the IC card being connected with the base card (10) only via bars (15) equipped with a rated breaking point,
- connecting the base card (10) and the housing (60), so that the IC card (30) lies in the receiving means (46),
- detaching the outside portion (12) of the base card (10) from the inserted IC card (30).

## Revendications

1. Elément de sécurité comprenant un boîtier (60) et une carte IC (30) au moins partiellement entourée par le boîtier et placée dans un logement (46) pratiqué dans le boîtier, la carte IC (30) étant une partie d'une carte de base (10) plus grande à l'intérieur de laquelle elle est agencée dans un évidement (20) et avec laquelle elle est reliée seulement par l'intermédiaire d'au moins une bride (15) pourvue d'un point de rupture privilégié, **caractérisé en ce que** le contour interne (13) bordant l'évidement (20) entoure dans la carte de base (10) une surface qui est égale ou supérieure à la surface de section transversale du boîtier (60) au niveau du logement (46).

2. Elément de sécurité selon la revendication 1, **caractérisé en ce que** la carte IC (30) est du type sans contact.

3. Elément de sécurité selon la revendication 1, **caractérisé en ce que** le boîtier (60) consiste en au moins deux parties de boîtier (40, 50) et **en ce qu'**au moins une d'elles présente une zone (45, 47) qui s'engage dans l'évidement (20) après placement sur une carte de base (10).

4. Elément de sécurité selon la revendication 3, **caractérisé en ce qu'**une des parties du boîtier (40) est réalisée à la façon d'une demi-coque présentant une surface de jonction orientée vers l'autre partie du boîtier (50) et **en ce que** le logement (46) est réalisé en tant qu'une zone renfoncée par rapport à la surface de jonction.

5. Elément de sécurité selon la revendication 1, **caractérisé en ce que** la profondeur (H) du logement (46) correspond à l'épaisseur (D) d'une carte de base (10).

6. Elément de sécurité selon la revendication 1, **caractérisé en ce que** la surface du logement (46) correspond à la surface de la carte IC (30).

7. Elément de sécurité selon la revendication 3, **caractérisé en ce que** les parties du boîtier (40, 50) présentent des éléments (49, 52) respectivement correspondants d'un système de jonction mécanique qui permet une jonction durable des parties du boîtier (40, 50).

8. Elément de sécurité selon la revendication 7, **caractérisé en ce que** la carte IC (30) présente au moins une encoche (34) sur son contour externe (32) et/ou un évidement dans sa surface à travers lesquels le système de jonction (49, 52) s'engage.

9. Elément de sécurité selon la revendication 8, **caractérisé en ce qu'**au moins une encoche (34) ou un évidement présente une forme sans symétrie de révolution ou qu'au moins deux encoches (34) ou évidements sont prévus dans un agencement sans symétrie de révolution et que ces derniers fixent de manière univoque la position relative de la carte IC (30) par rapport au logement (46), au moins relativement à un sens de l'axe.

10. Elément de sécurité selon la revendication 3, **caractérisé en ce que** le contour périphérique du boîtier (60) présente, au moins relativement à un axe, une forme asymétrique qui fixe de manière univoque la position relative des parties du boîtier (40, 50) les unes par rapport aux autres, au moins relativement à ce sens de l'axe.

11. Elément de sécurité selon la revendication 1, **caractérisé en ce que** le contour périphérique du boîtier (60) est exactement ajusté au contour interne (13) délimitant l'évidement (20) dans la carte de base (10).

12. Procédé de mise en place d'un système de sécurité comprenant les étapes :
- mise à disposition d'un boîtier (60) comportant un logement (46) destiné à une carte IC (30),
- mise à disposition d'une carte de base (10) plus grande dans laquelle, tout en ce qu'un évidement (20) plus grand que la surface de section transversale du boîtier (60) est laissé au niveau du logement (46), une carte IC (30) reliée à la carte de base (10) seulement par l'intermédiaire de brides (15) pourvues d'un point de rupture privilégié est réalisée.
- jonction de la carte de base (10) et du boîtier (60), de telle sorte que la carte IC (30) se trouve dans le logement (46),
- détachement enlevant de la carte IC (30) insérée la partie extérieure (12) de la carte de base (10).
